# EUROPEAN PATENT APPLICATION

(11) **EP 1 026 013 A1**
(43) Date of publication of application: **09.08.2000**
(21) Application number: 98936075.5
(22) Date of filing: 30.07.1998
(51) Int. Cl.: B60C 17/04, B60B 11/04

(54) **HUB FOR INSTALLING STANDBY WHEEL AND UNIT TO PREVENT STALENESS AS THE STANDBY WHEEL INSTALLED AT THE HUB**

(30) Priority: 31.07.1997 US 904237
(71) Applicant: Lin, Yng-Lang, Teipei, Taiwan Province (CN)
(72) Inventor: Lin, Yng-Lang, Teipei, Taiwan Province (CN)
(74) Representative: Isenbruck, Günter, Dr.
(86) International application number: CN9800140
(87) International publication number: WO9906229

(57) **Abstract**

The present invention relates to a construction of a safety wheel having a spare wheel, particularly to, a simple & ease way for manufacturing a wheel rim portion of the safety wheel and for providing for mounting the spare wheel which is namely a subsidiary ring and mounting coaxially with the wheel rim and mounting a tire, so as to support a car to be driven continuously when the tire is flat.

## Description

### BACKGROUND OF THE INVENTION

### (1) Field at the invention :

The present invention relates to a construction of a safety wheel having a spare wheel, particularly to, a simple & ease way tar manufacturing a wheel rim portion of the safety wheel and for providing for mounting the spare wheel which namely a subsidiary ring and mounting coxially with the wheel rim and mounting a tire, so as to support a car to be driven continuously when the tire iS flat.

### (2) Description of the prior art :

Although, previous has some like inventions of a safety wheel rim, but previous way for manufacturing a wheel rim portion of the safety wheel are getting the wheel rim portion to be found made by two kind of different molds and different time to respectively founding the two pieces of a plate like member ( first member ) and an annular like member ( second member ) which are for to be assembled the wheel rim portion and to clip the spare wheel, so very trouble and slow and production is very low and cost is very high etc. at meanufacturing especially is very difficult and trouble when test the two pieces respectively and for discovering whether or not having a pore leakaging of air even happen leakaging at air inside the tire when driving. Also, a facilities for providing for installing the spare wheel to the wheel rim portion is trouble even net strong. Another, wherein a rubber gasket of a device tar preventing leakaging of air after the spare wheel is mounted on the wheel rim portion and the tire is pumped up air is must respectively to be made by a way getting a rubber material to be heated and compressed and respectively once also once again, so that its production is very low and its cost is very high.

### SUMMARY OF THE INVENTION

First object of the present invention provides a simple and ease way for founding the wheel rim portion of the safety wheel, namely providing a simple and ease way getting the two pieces which are namely the plates like member and the annular like member to be fonuned and connected together at a common time and at once by a common mold then cutted and divided becomed the two pieces so as to manufacture the two pieces can vary simply and easly and quickly, especially is, can with a simple and ease way as that of test the conventional wheel rim end to avoid leakaging of air when test the two pieces they whether or not leakaging of air.

Second object at the present invention provides a tight pulling device tot stronging fixing the spare wheel on the wheel rim portion so as to make the spare wheel it able to bear a centrifugal force of a wheel of a car and further not separating tram the wheel rim portion when the wheel is running at high speed.

Third object of the present invention provides a extraordinary simple and ease device for preventing leakaging of air and not happen leakaging of air when the wheel rim portion is mounted up the spare wheel and when the tire is pumped up air.

Fourth object of the present Invention provides a extraordinary simple and ease manufacturing way for manufacturing the gasket.

### BRIEF DESCRIPTION OF THE DRAWINGS

FIG. 1 is section of the wheel rim portion of the safety wheel.
FIGS. 2, 3 are section and fragmentary of the plate like member which is namely first piece of the two pieces.
FIG. 4 is section and fragmentary of the safety wheel having an annular spare wheel and after the plate like member ( the first piece) and the annular like member ( second piece of the two pieces) are connected merged and formed the safety wheel.
FiGs. 5, 6 are section and fragmentary of the annular like member which is namely second piece.
FIG, 7 is plane side view of the annular spars wheel.
FIG. 8 is second which is after the plate like member and the annular like member are connected to form the wheel rim portion of the safety wheel having the annular spare wheel.
FIG. 9 is plane at a strip square rubber.

### DESCRIPTION OF THE PREFERRED EMBODIMENT

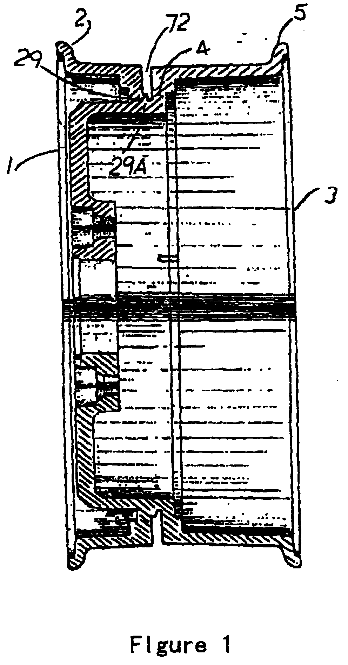

Please see Fig. 1, relates to the way founding the two pieces of the plate like member and the annular like member as the first object of the present invention, is getting the plate like member 1 and the annular like member 3 to be fonued end connected together in a common mold and at a common time and fulfiled at once and founded into a wheel rim Fig. 1 with two portions which are namely the plate like member portion 1 and the annular like member portion 3, and with first feature tasted easly as that of the conventional wheel rim when tested whether or not having a pore leakaging of air and second feature made easly & quickly, so as so to made the plate like member 3 and the annular like member 3 after cuted sparated from the connected portion, then to connect marge the two portions to form an assembled-type wheel rim and to fix the annular spare wheel rig. 4 No. 8 and to make the test to simply and easly as that of test the conventional wheel rim and to avoid leakage of air. The connected together is connection only by a thin annular connecting portion 29A of a proper thickness and not very thick, namely there is separated and into an annular groove at between a periphery portion of a bottom at the plate like member 1 and an inward flange 5A of the annular like member 3, so easily and quickly only to cut the thin annular connecting portion 29A when cutting the two portions which are namely the two pieces. The plate like member 1 has a flange 2 as that of one side of the conventional wheel rim on its one aide and for bolted fixed to an axle of a car. The annular like member 3 has an inward flange 5A on its one side for providing for connected merged together with a bottom of the plate like member 1 and has a flange 5 as that of one side of the conventional wheel rim on its another side.

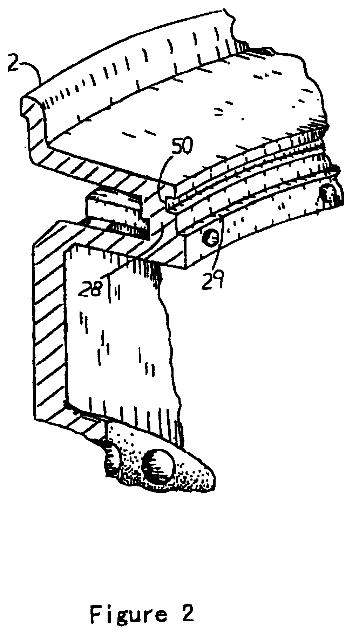

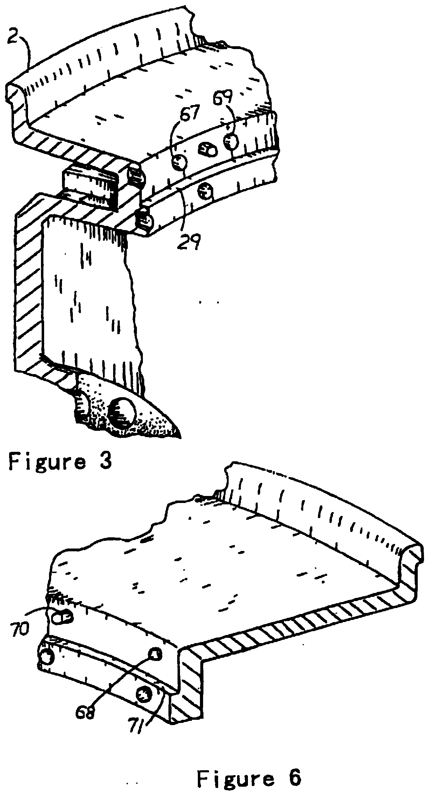

The tight pulling device of the second object of present invention, is not only comprising an annular groove Fig. 2 No.50 or plurality of caves Fig. 3 No. 67,69 encircling on a periphery portion of a bottom of one of the two pieces which are namely the plate like member and the annular like member 1 or 3, especially is encircling on the periphery portion of the bottom of the plate like member which is namely the first piece 1, but also comprising an arc like convex portion ( for exemple Figs, 1, 2 No.56,57 ) locating on one side of an inward flange 13 of the annular spare wheel 8 and extending toward outside from a lateral side of the inward flange 13 of the annualr spare wheel 8 or comprising many convex portions or pillars distributing on the lateral site of the inward 13 at the spare wheel, for providing to be inserted to the annualr groove 50 of one of the two pieces 1 or 3, especially is inserted to the annular groove 52 or caves 67, 69 locating the periphery portion of the bottom of the plate like member which is namely the first piese 1, so as to install the annular spare wheel 8 to the wheel rim portion Fig. 1 by a tight pulling device and enabling the annualr sapre wheel 8 to bear the centrifugal force of the wheel of the car and further not separating from the wheel rim portion Fig. 1 when the wheel is running at a high speed.

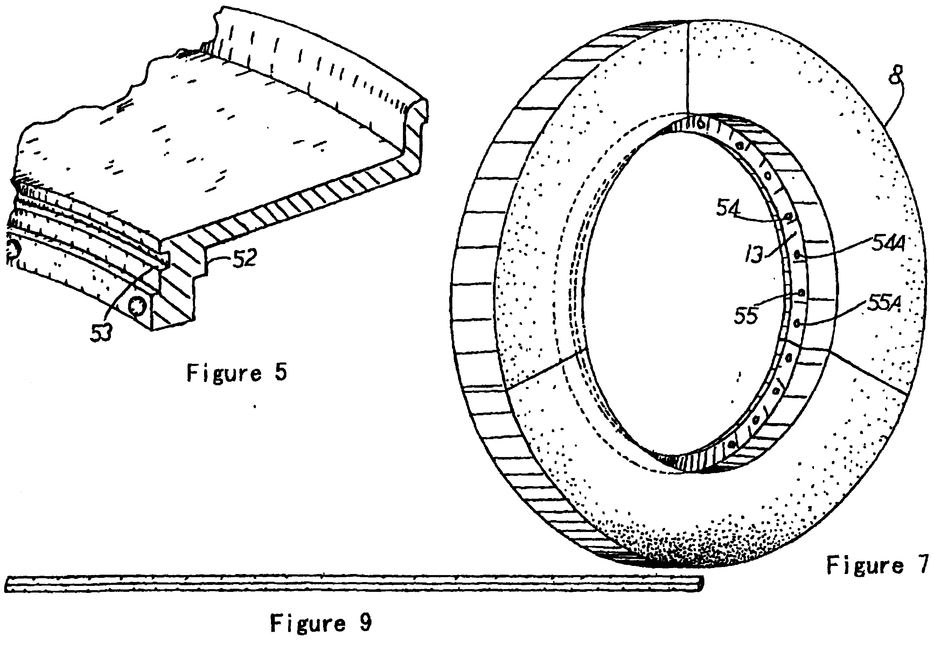

The tight pulling device of the second object of the present invention further not only comprising another annular groove Fig. 5 No. 53 encircling on another one side of the Inward flange 5A of the annular like member 3 and extending toward outside from the lateral side of the inward flange 5A or comprising many caves Fig. 6 No. 68 or many convex portions or pillars Fig. 7 No. 54, 55 distributing on the lateral side at the inward 13 of the spare wheel 8, for provide to be inserted to the another annualr groove 53 or the many eaves 68 and further to fix the spare wheel 8. The annular groove 50 encircling on the plate like member which is namely the first piece 1 and the annular groove 50, 53 encircling on the annular like member which is namely the second piece 3 are may replaced by the plurality of caves or convexs 67. 68. if, the arc convex portion 55, 57 of tea sides at the inward flange of the spare wheel 8 is replaced by the many convex portions or pillars 54,55 distributing on the lateral side of the inward flange 13 of the 6 spare wheel 8, or is replaced by many holes Fig. 7 No. 54A,55A distributing on the inward flange 13 of the spare wheel.

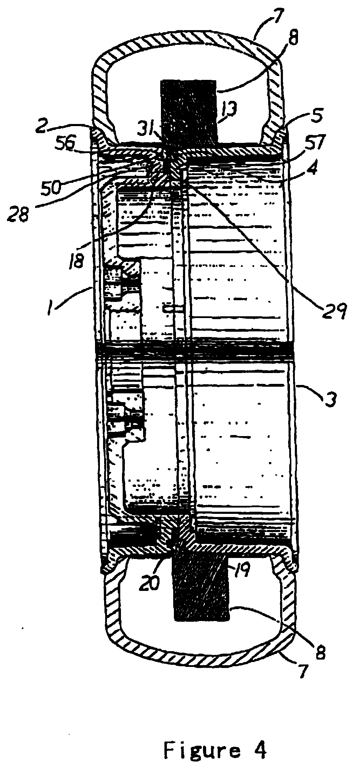

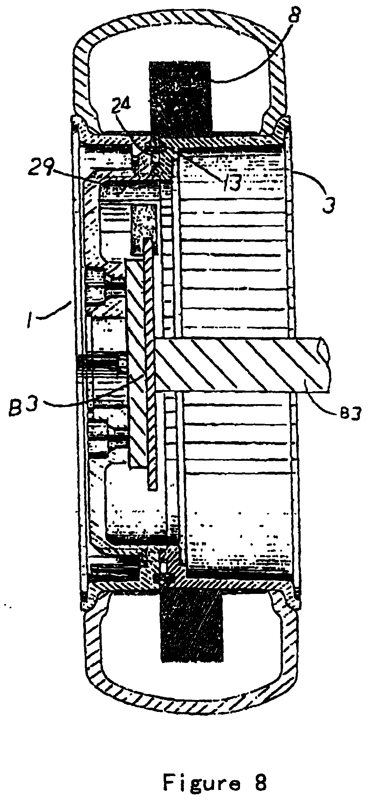

The extraordinary simple and ease device preventing leakaging of air of the third object of the present invention comprises an annular step portion Fig. 1, 2, 4 No. 29 encircling on the periphery portion of the bottom of the plate like member 1, an annular groove Fig. 8 No. 24 formed at between the inward flangs 13 of the spare wheel 8 and the annualr step portion 29, and a gasket which is namely an annular sealing member Fig. 4 No. 18 inlaid in the annular groove 24 etc., so that the gasket 18 can to be clipped tighty and to seal those petty spaces respectively at between the plate Like member 1 and the inward flange 13 of the spare wheel 8 and the annular like member 3 after the plate like member 1 and the annuler like member 3 are conected marged together end to form the wheel rim portion Fig 1 of the safety wheel and to clip the inward flange 13 of the spare wheel 8 and to fix the sapre wheel 8 and to fix the tire 7, so the air not leakaging from the those petty spaces when the trie is pumped up the air.

The extraordinary simple and ease manufacturing way for manufacturing the gasket of the present invention is making the gasket 18 by a strip rubber or a strip thing Fig. 9 spring as that of the rubber and is getting the strip rubber or the strip thing to inlay in the annular groove 24, thereby to bend the strip rubber or the strip thing and to make two ends of the strip rubber or the strip thing to contact together and to form the gasket, so not only sealing the petty spaces is simply and easly, but also, manufacturing the gasket only to get a rubber material to be extruded to into a very long strip rubber by an extruding way, then to cut the very long strip rubber to obtain the strip rubber and to get the strip rubber to inlay in the annular groove 24 and to connect the two ends at the strip rubber to form the gasket and extraordinary simple and quickly and not must respectively to get a rubber material to he heated and compressed in a mold to into each gasket at once also once again so that its production is very low and its cost is very high.

Having now fully explained the invention as to its purpose, its construction and its use, it will be evident that the same is susceptible to numerous variations without departing from the spirit thereof, and accordingly, attention is now directed to the appended claims to ascertain the actual scope of the same.

## Claims

1. A safety wheel rim having a spare wheel to support a car to be driven continuously when the tire is burst or flat, comprising a plate like member providing to be bolted and fixed to an axle and having a flange as that of one side of conventional wheel rim on its one side, an assembled type wheel rim incorporated and linked by an inward flange providing to be connected with a bottom of said plate like member on its one side and annular like member having a flange as that of another side of said conventional wheel rim, and annular spare wheel located between said plate like member and said annular like member and coaxial to said assembled type wheel rim, **characterizing in that** the wheel rim portion is that portions of said plate like member and said annular like member by means of getting said plate like member and said annular like member to be molded and linked together in the same mould at the same time and test of leakage of air can be in a simple and easy way as that of the conventional wheel rim, then to be cut and separated into said plate like member and said annular like member, for providing said incorporated and linked assembled type wheel rim to mounted with said tire and providing said spare wheel to form said safety wheel, especially providing to avoid said wheel rim portion from air leakage during use.

2. A safety wheel rim as claimed in claim 1, **characterizing in that** it further comprises annular groove between said plate like member portion and said annular like member portion, to make said connected portion not very thick and be connected together only by a thin annular portion so as to cut easily and quickly.

3. A safety wheel rim as claimed in claim 1 or 2, **characterizing in that** it further comprises a groove encircling on its periphery portion of its bottom of said plate like member for providing convex portion locating on an inward flange of said spare wheel and extending toward a lateral side of said flange of said inward flange to inlay thereto, so as to hold said spare wheel and further strongly fix said spare wheel.

4. A safety wheel rim as claimed in claim 2 or 3, **characterizing in that** it further comprises art annular step portion encircling on its periphery portion of its bottom of said plate like member so as to separate and form an annular groove with the inward flange of said spare wheel for providing a gasket to inlay thereto, thereby to make said gasket to be clipped tightly and to seal those spaces respectively at between said plate like member and said inward flange of said spare wheel and said annular like member after said plate like member and said annular like member are connected together to form said wheel rim and to install said spare wheel and said tire, and thereby to make air not leaking from said spaces when said tire is pumped up with air.

5. A safety wheel rim as claimed in claim 1 or 2 or 3 or 4, **characterizing in that** it further comprises another annular groove of periphery portion of said inward flange encircling on one side of said annular like member and providing to be connected with said bottom of plate like member, for providing for said convex portion locating on said inward flange of said spare wheel and extending toward said lateral side of said inward flange to inlay thereto so as to tight pull said spare wheel and further strongly fix said spare wheel.

6. A safety wheel rim as claimed in claim 3 or 5, **characterizing in that** said annular groove is replaced by many caves or many convex portion encircling on said periphery portion and providing for said convex portion encircling on said lateral aide of the inward of the spare wheel to inlay thereto, or providing to through hole(s) distributing said inward flange of said spare wheel, so as to tight pull said spare wheel and further strongly fix said spare wheel.

7. A safety wheel rim having a spare wheel to support a car to be driven continuously when the tire is burst or flat, comprising a plate like member providing to be bolted and fixed to an axle and having a flange as that of one side of conventional wheel rim on its one side, an assembled type wheel rim incorporated and linked by an inward flange providing to be connected with a bottom of said plate like member on its one side and annular like member having a flange as that of another side of said conventional wheel rim, and annular spare wheel located between said plate like member and said annular like member and coaxial to said assembled type wheel rim, **characterizing in that** it comprises:
A groove encircling on its periphery portion of its bottom of said plate like member, and
Convex portion locating on said inward flange of said spare wheel and extending toward said lateral side of said inward flange so as to insert said annular groove to strongly fix said spare wheel.

8. A safety wheel rim, as claimed in claim 7, **characterizing in that** said convex portion is/or an arc like convex portion(s) extending laterally toward the inward flange of said spare wheel.

9. A safety wheel rim having a spare wheel to support a car to be driven continuously when the tire is burst or flat, comprising a plate like member providing to be bolted and fixed to an axle and having a flange as that of one side of conventional wheel rim on its one side, an assembled type wheel rim incorporated and linked by an inward flange providing to be connected with a bottom of said plate like member on its one side and annular like member having a flange as that of another side of said conventional wheel rim, and annular spare wheel located between said plate like member and said annular like member and coaxial to said assembled type wheel rim, **characterizing in that** it comprises:
Many caves encircling on its periphery portion of its bottom of said plate like member, and
Convex portion locating on said inward flange of said spare wheel and extending toward said lateral side of said inward flange so as to insert said annular groove to strongly fix said spare wheel.

10. A safety wheel rim having a spare wheel to support a car to be driven continuously when the tire is burst or flat, comprising a plate like member providing to be bolted and fixed to an axle and having a flange as that of one aids of conventional wheel rim on its one side, an assembled type wheel rim incorporated and linked by an inward flange providing to be connected with a bottom of said plate like member on its one side and annular like member having a flange as that of another side of said conventional wheel rim, and annular spare wheel located between said plate like member and said annular like member and coaxial to said assembled type wheel rim, **characterizing in that** it comprises:
Many convex portions or columns encircling on its periphery portion of its bottom of said plate like member, and
Many through-holes distributing said inward flange of said spare wheel, for providing said convex portions or columns to pass through to strongly fix said spare wheel.

11. A safety wheel rim having a spare wheel to support a car to be driven continuously when the tire is burst or flat, comprising a plate like member providing to be bolted and fixed to an axle and having a flange as that of one side of conventional wheel rim on its one side, an assembled type wheel rim incorporated and linked by an inward flange providing to be connected with a bottom of said plate like member on its one side and annular like member having a flange as that of another side of said conventional wheel rim, and annular spare wheel located between said plate like member and said annular like member and coaxial to said assembled type wheel rim, **characterizing in that** it comprises:
A annular step portion encircling on its periphery portion of its bottom of said plate like member, and
A groove encircling on its periphery portion of its bottom of said plate like member for providing a gasket to inlay thereto, thereby to make said gasket to be clipped tightly and to seal those spaces respectively at between said plate like member and said inward flange of said spare wheel and said annular like member after said plate like member and said annular like member are connected together to form said wheel rim and to install said spare wheel and said tire, and thereby to make air not leaking from said spaces when said tire is pumped up with air.

12. A safety wheel rim as claimed in claim 11, **characterizing in that** said gasket is connected and formed by a strip rubber or a strip thing with resilience as rubber after being inserted and bent into said annular groove so that it is not only ease to seal said spaces but also very simple and quick to be manufactured.
